# FASCICULE DE BREVET EUROPEEN

(11) **EP 1 817 218 B1**
(45) Date de publication et mention de la délivrance du brevet: **18.06.2008**
(21) Numéro de dépôt: 05819399.6
(22) Date de dépôt: 21.11.2005
(51) Int. Cl.: B60T 13/74

(54) **DISPOSITIF DE FREINAGE ELECTRIQUE POUR VEHICULE**
ELEKTRISCHE BREMSVORRICHTUNG FÜR FAHRZEUGE
ELECTRIC BRAKING DEVICE FOR VEHICLES

(30) Priorité: 25.11.2004 FR 0452756
(43) Date de publication de la demande: 15.08.2007
(73) Titulaire: RENAULT S.A.S., 92100 Boulogne Billancourt (FR)
(72) Inventeur: BELLEGO, Laurent, F-78860 SAINT NOM LA BRETECHE (FR)
(86) Numéro de dépôt international: PCT/FR2005/050974
(87) Numéro de publication internationale: WO 2006/056714

(56) Documents cités:
- US-A- 4 561 527
- US-A- 5 735 579
- US-A- 5 952 799
- US-A1- 2003 066 719

## Description

### Domaine technique et art antérieur

L'invention concerne un dispositif de freinage électrique pour véhicule et, plus particulièrement, un dispositif de freinage électrique pour véhicule qui gère les phases de veille (moteur coupé) et de réveil du système de freinage.

Le document US 5 952 799 décrit les caractéristiques suivantes de la revendication 1: Dispositif de freinage électrique pour véhicule, le dispositif comprenant:
- des modules de freinage de roues avant et/ou arrière du véhicule,
- au moins un calculateur de bord,
- au moins un module de commande utilisateur qui, lorsqu'il est sollicité par l'utilisateur, délivre, au calculateur de bord, des signaux de commande de freinage pour activer les modules de freinage de roues avant et/ou arrière lorsque les modules de freinage sont alimentés, et
- des moyens pour couper l'alimentation des modules de freinage de roues avant et/ou arrière.

Les systèmes de freinage électrique pour véhicule de l'art connu comprennent un grand nombre de modules électriques et électroniques. Dans le futur, les systèmes de freinage électrique pour véhicule, actuellement connus sous l'appellation de systèmes « X-By-Wire », seront des systèmes de plus en plus complexes dans lesquels la consommation électrique des modules devra être maîtrisée. En particulier, l'architecture électrique et électronique des systèmes de freinage devra être construite en tenant compte des consommations électriques du mode veille (moteur coupé). En effet, si ces consommations s'avéraient être trop élevées, la ou les batterie(s) du véhicule risquerai(en)t de se décharger, ce qui provoquerait une gêne pouvant aller jusqu'à l'immobilisation du véhicule.

A ce jour, les stratégies de veille et de réveil ne sont pas prises en compte dans les systèmes de freinage électrique pour véhicule.

### Exposé de l'invention

Le dispositif de freinage électrique pour véhicule de l'invention ne présente pas les inconvénients mentionnés ci-dessus.

En effet, l'invention concerne un dispositif de freinage électrique pour véhicule qui comprend :
- des modules de freinage de roues avant et/ou arrière du véhicule, non alimentés lorsque le véhicule est en état de veille,
- au moins un calculateur de bord,
- au moins un module de commande utilisateur qui, lorsqu'il est sollicité par l'utilisateur, délivre, au calculateur de bord, un signal de commande d'alimentation pour commander une alimentation des modules de freinage de roues avant et/ou arrière et, aux modules de freinage de roues avant et/ou arrière, des signaux de commande de freinage pour activer les modules de freinage de roues avant et/ou arrière lorsque les modules de freinage sont alimentés, et
- des moyens pour couper l'alimentation des modules de freinage de roues avant et/ou arrière dès lors que le véhicule a une vitesse nulle et que les roues avant et/ou arrière du véhicule sont immobilisées sous l'action des modules de freinage.

Selon une caractéristique supplémentaire de l'invention, le module de commande utilisateur comprend au moins un capteur apte à détecter une pression de l'utilisateur sur un élément de contact.

Selon encore une caractéristique supplémentaire de l'invention, un élément de contact est constitué par la pédale de frein du véhicule ou par un contact situé sur le tableau de bord du véhicule.

Selon encore une caractéristique supplémentaire de l'invention, le contact situé sur le tableau de bord du véhicule est un bouton ou une palette.

Selon encore une caractéristique supplémentaire de l'invention, dans le cas où le dispositif de freinage électrique comprend des modules de freinage de roues avant et des modules de freinage de roues arrière, le signal de commande de freinage délivré au module de freinage de roue avant gauche est délivré en outre au module de freinage de roue arrière gauche, et le signal de commande de freinage délivré au module de freinage de roue avant droite est délivré en outre au module de freinage de roue arrière droite.

Selon encore une caractéristique supplémentaire de l'invention, dans le cas où le dispositif de freinage électrique comprend des modules de freinage de roues avant et des modules de freinage de roues arrière, le dispositif comprend un premier module de commande utilisateur et un second module de commande utilisateur, le signal de commande de freinage délivré par le premier module de commande utilisateur au module de freinage de roue avant gauche est délivré en outre au module de freinage de roue arrière droite, le signal de commande de freinage délivré par le premier module de commande utilisateur au module de freinage de roue avant droite est délivré en outre au module de freinage de roue arrière gauche, le signal de commande de freinage délivré par le second module de commande utilisateur au module de freinage de roue avant gauche est délivré en outre au module de freinage de roue arrière droite, et le signal de commande de freinage délivré par le second module de commande utilisateur au module de freinage de roue avant droite est délivré en outre au module de freinage de roue arrière gauche.

Selon encore une caractéristique supplémentaire de l'invention, dans le cas où le dispositif de freinage électrique comprend des modules de freinage de roues avant et des modules de freinage de roues arrière, le dispositif comprend un premier module de commande utilisateur et un second module de commande utilisateur, le signal de commande de freinage délivré par le premier module de commande utilisateur au module de freinage de roue avant gauche est délivré en outre au module de freinage de roue arrière gauche, le signal de commande de freinage délivré par le premier module de commande utilisateur au module de freinage de roue avant droite est délivré en outre au module de freinage de roue arrière droite, le signal de commande de freinage délivré par le second module de commande utilisateur au module de freinage de roue avant gauche est délivré en outre au module de freinage de roue arrière gauche, et le signal de commande de freinage délivré par le second module de commande utilisateur au module de freinage de roue avant droite est délivré en outre au module de freinage de roue arrière droite.

Selon encore une caractéristique supplémentaire de l'invention, le dispositif comprend, en outre, des moyens pour détecter un mode dégradé de fonctionnement de freinage du véhicule en état de marche ou en mode marche-arrêt et des moyens aptes à permettre de freiner le véhicule en état de marche ou en mode marche-arrêt à l'aide du module de commande utilisateur lorsqu'un mode dégradé de fonctionnement est détecté.

Selon encore une caractéristique supplémentaire de l'invention, le dispositif comprend un réseau de communication pour permettre au moyens de freinage de communiquer entre eux afin de confirmer qu'une demande de freinage du véhicule à l'aide du module de commande utilisateur est requise et, si la demande de freinage est confirmée, des moyens pour maintenir la stabilité du véhicule lorsque le freinage du véhicule est mis en oeuvre.

### Brève description des figures

D'autres caractéristiques et avantages de l'invention apparaîtront à la lecture de la description qui va suivre faite en référence aux figures jointes parmi lesquelles :
- la figure 1 représente un dispositif de freinage électrique pour véhicule selon un premier mode de réalisation de l'invention ;
- la figure 2 représente un dispositif de freinage électrique pour véhicule selon un deuxième mode de réalisation de l'invention ;
- la figure 3 représente un premier perfectionnement du dispositif de freinage électrique selon l'invention ;
- la figure 4 représente un deuxième perfectionnement du dispositif de freinage électrique selon l'invention ;
- la figure 5 représente un troisième perfectionnement du dispositif de freinage électrique selon l'invention.

Sur toutes les figures, les mêmes références désignent les mêmes éléments.

### Description détaillée de modes de réalisation de l'invention

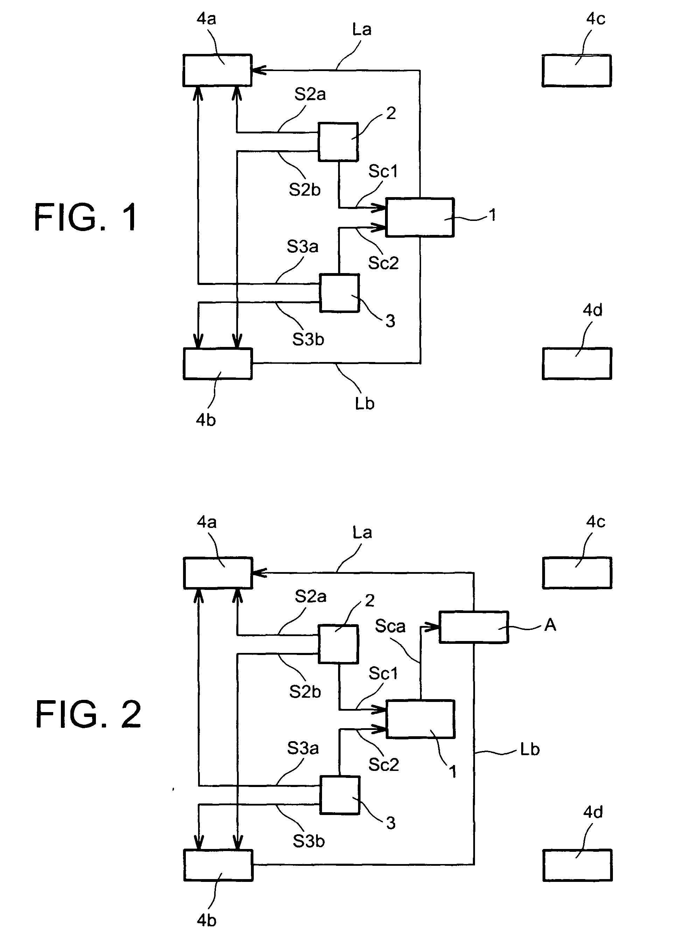

La figure 1 représente un dispositif de freinage électrique pour véhicule selon un premier mode de réalisation de l'invention.

Le système de freinage comprend un module central 1, deux modules de commande utilisateur 2 et 3 et un ensemble de modules de freinage 4a, 4b, 4c, 4d.

Le module central 1 est, par exemple, un calculateur de bord équipé d'un dispositif d'alimentation. De façon connue en soi, chacun des modules de freinage 4a, 4b, 4c, 4d comprend, entre autres, un moteur électrique, un réducteur et une électronique de commande. Les modules de freinage 4a et 4b sont associés aux deux roues avant du véhicule et les modules de freinage 4c, 4d sont associés aux deux roues arrière. Les modules de commande utilisateur 2 et 3 sont tous deux reliés au module central 1 et aux modules de freinage des roues avant 4a, 4b. Des lignes de puissance La et Lb relient le dispositif d'alimentation contenu dans le module central 1 aux modules respectifs 4a et 4b. Afin d'éviter l'établissement de modes communs sur les lignes La et Lb, celles-ci sont reliées à deux sorties distinctes du module central 1.

Les modules utilisateur 2 et 3 sont des dispositifs de commande des modules de frein 4a et 4b lorsque le véhicule est en état de veille (moteur coupé). Le modules utilisateur 2 et 3 commandent les modules de frein 4a et 4b par le biais, respectivement, de la pédale de frein et d'un contact situé sur le tableau de bord du véhicule (bouton, palette, etc.). Lorsque le conducteur du véhicule établit une pression sur la pédale de frein, le module de commande 2 délivre des signaux de commande de freinage S2a et S2b aux modules de frein respectifs 4a et 4b et un signal de commande d'alimentation Sc1 au module central 1. Le module 2 peut être, par exemple, un dispositif de contact en tout ou rien qui délivre les signaux S2a, S2b et Sc1 sous la forme d'informations binaires dont un premier état indique que le contact est établi avec la pédale de frein et un deuxième état qu'aucun contact n'est établi avec la pédale de frein. D'autres formes de signaux, comprenant par exemple plus de deux états, peuvent également être délivrées par le module 2.

De même, lorsqu'une pression est appliquée sur le contact du module utilisateur 3, ce dernier délivre des signaux de commande de freinage S3a et S3b aux modules de frein respectifs 4a et 4b et un signal de commande d'alimentation Sc2 au module central 1. De façon préférentielle, les signaux délivrés par le module 3 sont également des signaux binaires.

Lorsque le véhicule est en veille, seul le module central 1 est alimenté. Selon le premier mode de réalisation de l'invention, le module central 1 gère directement l'alimentation des modules de freinage 4a, 4b des roues avant. Les signaux Sc1 et/ou Sc2 permettent au module central 1 de détecter la sollicitation des modules de commande utilisateur 2 et/ou 3. Sous l'action des signaux Sc1 et/ou Sc2 le module central 1 alimente en conséquence les modules de freinage 4a et 4b. Sous l'action des signaux S2a, S2b et/ou S3a, S3b, et du fait de leur alimentation, les modules de freinage 4a et 4b serrent alors les freins qui leur sont associés, permettant ainsi une immobilisation du véhicule, puis verrouillent la position des plaquettes de frein afin de maintenir la force appliquée. Le frein de stationnement étant ainsi activé, l'alimentation des modules 4a et 4b est alors coupée.

La figure 2 représente un deuxième mode de réalisation de l'invention dans lequel l'alimentation A des modules de frein est à l'extérieur du module central 1. L'alimentation A est alors commandée par un signal Sca délivré par le module central 1 sous l'action du signal Sc1 et/ou du signal Sc2.

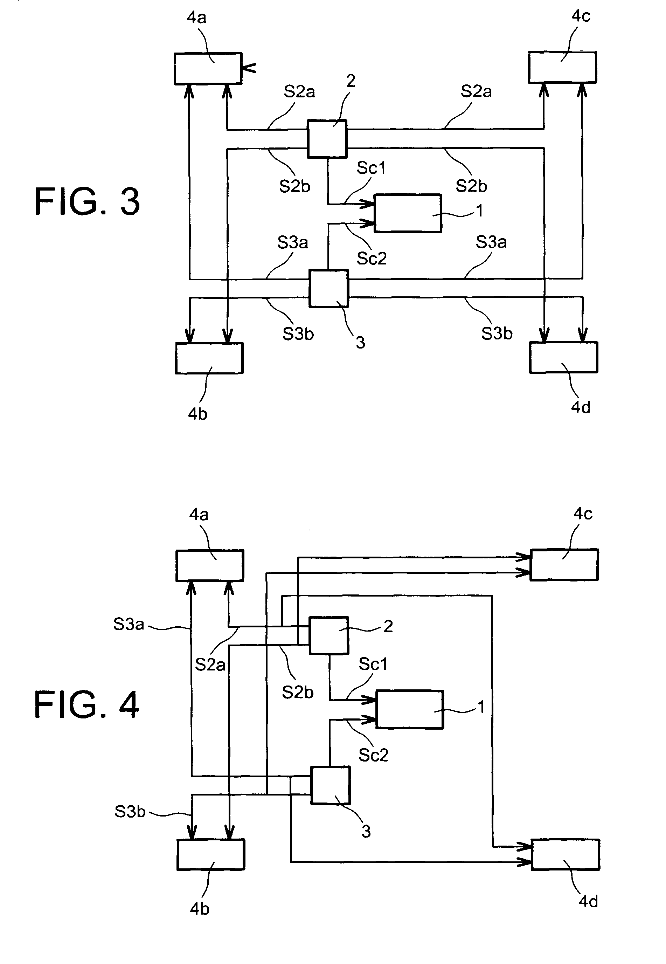

Les figures 3-5 représentent différents exemples de réalisation de l'invention dans lesquels les signaux Sc1 et/ou Sc2 sont appliqués non seulement aux modules de freinage des roues avant 4a, 4b, mais également aux modules de freinage des roues arrière 4c, 4d. Pour des raisons de commodité, les lignes d'alimentation qui relient le module central 1 aux modules de freinage des roues arrière 4c et 4d ne sont pas représentés. De telles lignes d'alimentation existent cependant, et leur configuration est conforme à la configuration des lignes d'alimentation La et Lb des figures 1 ou 2.

La figure 3 représente un exemple de configuration dans lequel chaque module 2, 3 possède deux sorties supplémentaires. Les signaux S2a et S2b sont alors délivrés sur les deux sorties supplémentaires du module 2 et transmis aux modules respectifs 4c et 4d. De même, les signaux S3a et S3b sont délivrés sur les deux sorties supplémentaires du module 3 et transmis aux modules respectifs 4c et 4d.

La figure 4 représente un exemple de configuration dans laquelle :
- le signal S2a transmis au module 4a est également transmis au module 4d et le signal S2b transmis au module 4b est également transmis au module 4c, et
- le signal S3a transmis au module 4a est également transmis au module 4d et le signal S3b transmis au module 4b est également transmis au module 4c.

Une telle configuration est dite « configuration diagonale » dans la mesure où les modules de freinage 4a et 4b sont associés aux roues avant respectives droite et gauche et les modules de freinage 4c et 4d associés aux roues arrière respectives droite et gauche.

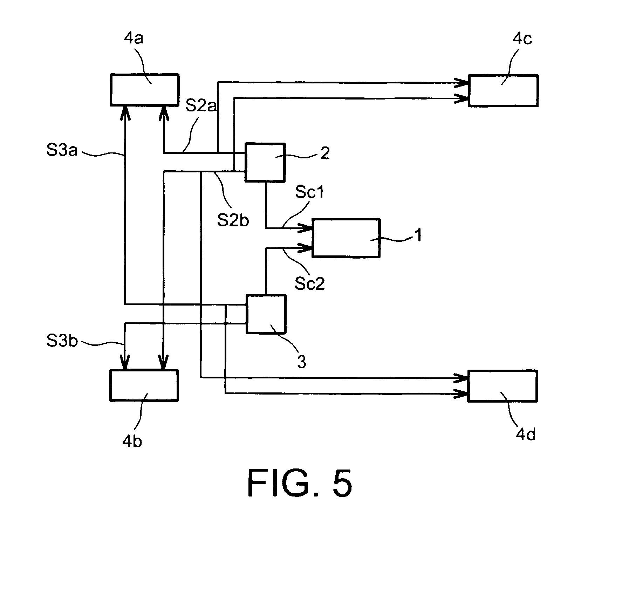

La figure 5 représente un exemple de configuration dans laquelle :
- le signal S2a transmis au module 4a est également transmis au module 4c et le signal S2b transmis au module 4b est également transmis au module 4d, et
- le signal S3a transmis au module 4a est également transmis au module 4c et le signal S3b transmis au module 4b est également transmis au module 4d.

Une telle configuration est dite « configuration droite/gauche » dans la mesure où les modules de freinage 4a et 4b sont associés aux roues avant respectives droite et gauche et les modules de freinage 4c et 4d associés aux roues arrière respectives droite et gauche.

Lorsqu'un véhicule est en marche (c'est-à-dire lorsque le conducteur a démarré le moteur), le freinage du véhicule s'effectue de façon connue en soi via la pédale de frein. Des capteurs placés sur la pédale de frein et qui ne sont alimentés que lorsque le moteur fonctionne ou lorsque les conditions d'arrêt du moteur sont réalisées en mode marche-arrêt, communément appelé mode « Start & Stop » (moteur coupé à l'arrêt mais toujours disponible), permettent de détecter, d'une part, une information de position ou d'excursion de la pédale et, d'autre part, une information sur la force exercée sur la pédale. Lors de certains modes dégradés de fonctionnement, l'information provenant de ces capteurs n'est pas exploitable. Un avantage de l'invention est alors de permettre de freiner le véhicule grâce aux informations provenant des modules 2 et/ou 3.

A cette fin, le dispositif de freinage selon l'invention comprend des moyens pour détecter un mode dégradé de fonctionnement des moyens de freinage du véhicule en état de marche ou en mode « Start et Stop » et des moyens pour permettre de freiner le véhicule en état de marche à l'aide des moyens de commande utilisateur lorsqu'un mode dégradé de fonctionnement est détecté. Préférentiellement, le dispositif de freinage comprend alors un réseau de communication qui permet aux modules de freinage 4a, 4b et, éventuellement, 4c et 4d, de communiquer entre eux pour confirmer la demande de freinage et des moyens pour maintenir la stabilité du véhicule lorsque le freinage est mis en oeuvre.

La nature des liaisons entre les modules de commande 2 et 3 et les modules de freinage 4a-4d recouvre un large éventail de possibilités. Les liaisons peuvent être, par exemple, des liaisons filaires ou des liaisons non filaires (CAN, LIN, « Time trigger », etc.).

Avantageusement, l'invention s'adapte à un grand nombre de réseaux d'alimentation. Il peut s'agir d'un réseau 14V, par exemple avec deux batteries 12V, d'un réseau dual 14V/42V, par exemple avec une batterie 12V et une batterie 36V, ou encore d'un réseau 42V, par exemple avec deux batteries 36V.

Sur l'ensemble des figures de la demande, le dispositif de freinage selon l'invention comprend des modules de freinage de roues avant 4a, 4b et des modules de freinage de roues arrière 4c, 4d. L'invention concerne également les cas où le dispositif de freinage ne comprend que des modules de freinage de roues avant ou que des modules de freinage de roues arrière. C'est pour des raisons de commodité que ces autres modes de réalisation ne sont pas représentés sur les figures de la demande.

## Revendications

1. Dispositif de freinage électrique pour véhicule, le dispositif comprenant :
- des modules de freinage de roues avant (4a, 4b) et/ou arrière (4c, 4d) du véhicule, non alimentés lorsque le véhicule est en état de veille,
- au moins un calculateur de bord (1),
- au moins un module de commande utilisateur (2, 3) qui, lorsqu'il est sollicité par l'utilisateur, délivre, au calculateur de bord (1), un signal de commande d'alimentation (Sc1, Sc2) pour commander une alimentation des modules de freinage de roues avant et/ou arrière et, aux modules de freinage de roues avant (4a, 4b) et/ou arrière (4c, 4d), des signaux de commande de freinage (S2a, S2b ; S3a, S3b) pour activer les modules de freinage de roues avant et/ou arrière lorsque les modules de freinage sont alimentés, et
- des moyens pour couper l'alimentation des modules de freinage de roues avant et/ou arrière dès lors que le véhicule a une vitesse nulle et que les roues avant et/ou arrière du véhicule sont immobilisées sous l'action des modules de freinage.

2. Dispositif selon la revendication 1, dans lequel le module de commande utilisateur (2, 3) comprend au moins un capteur apte à détecter une pression de l'utilisateur sur un élément de contact.

3. Dispositif selon la revendication 2, dans lequel un élément de contact est constitué par la pédale de frein du véhicule ou par un contact situé sur le tableau de bord du véhicule.

4. Dispositif selon la revendication 3, **caractérisé en ce que** le contact situé sur le tableau de bord du véhicule est un bouton ou une palette.

5. Dispositif selon l'une quelconque des revendications précédentes dans le cas où il comprend des modules de freinage de roues avant et des modules de freinage de roues arrière, **caractérisé en ce que** le signal de commande de freinage (S2a, S3a) délivré au module de freinage de roue avant gauche est délivré en outre au module de freinage de roue arrière gauche, et le signal de commande de freinage (S2a, S3a) délivré au module de freinage de roue avant droite est délivré en outre au module de freinage de roue arrière droite.

6. Dispositif selon l'une quelconque des revendications 1 à 4 dans le cas où il comprend des modules de freinage de roues avant et des modules de freinage de roues arrière, **caractérisé en ce qu'**il comprend un premier module de commande utilisateur (2) et un second module de commande utilisateur (3), le signal de commande de freinage (S2b) délivré par le premier module de commande utilisateur (2) au module de freinage de roue avant gauche (4b) est délivré en outre au module de freinage de roue arrière droite (4c), le signal de commande de freinage (S2a) délivré par le premier module de commande utilisateur (2) au module de freinage de roue avant droite (4a) est délivré en outre au module de freinage de roue arrière gauche (4d), le signal de commande de freinage (S3b) délivré par le second module de commande utilisateur (3) au module de freinage de roue avant gauche (4b) est délivré en outre au module de freinage de roue arrière droite (4c), et le signal de commande de freinage (S3a) délivré par le second module de commande utilisateur (3) au module de freinage de roue avant droite (4a) est délivré en outre au module de freinage de roue arrière gauche (4d).

7. Dispositif selon l'une quelconque des revendications 1 à 4 dans le cas où il comprend des modules de freinage de roues avant et des modules de freinage de roues arrière, **caractérisé en ce qu'**il comprend un premier module de commande utilisateur (2) et un second module de commande utilisateur (3), le signal de commande de freinage (S2b) délivré par le premier module de commande utilisateur (2) au module de freinage de roue avant gauche (4b) est délivré en outre au module de freinage de roue arrière gauche (4d), le signal de commande de freinage (S2a) délivré par le premier module de commande utilisateur (2) au module de freinage de roue avant droite (4a) est délivré en outre au module de freinage de roue arrière droite (4c), le signal de commande de freinage (S3b) délivré par le second module de commande utilisateur (3) au module de freinage de roue avant gauche (4b) est délivré en outre au module de freinage de roue arrière gauche (4d), et le signal de commande de freinage (S3a) délivré par le second module de commande utilisateur (3) au module de freinage de roue avant droite (4a) est délivré en outre au module de freinage de roue arrière droite (4c).

8. Dispositif selon l'une quelconque des revendications précédentes, **caractérisé en ce qu'**il comprend, en outre, des moyens pour détecter un mode dégradé de fonctionnement de moyens de freinage du véhicule en état de marche ou en mode marche-arrêt et des moyens aptes à permettre de freiner le véhicule en état de marche ou en mode marche-arrêt à l'aide du module de commande utilisateur (2, 3) lorsqu'un mode dégradé de fonctionnement est détecté.

9. Dispositif selon la revendication 8, **caractérisé en ce qu'**il comprend un réseau de communication pour permettre aux modules de freinage de communiquer entre eux afin de confirmer qu'une demande de freinage du véhicule à l'aide du module de commande utilisateur (2, 3) est requise et, si la demande de freinage est confirmée, des moyens pour maintenir la stabilité du véhicule lorsque le freinage du véhicule est mis en oeuvre.

## Claims

1. Vehicle electric braking device, the device comprising:
- braking modules for the front wheels (4a, 4b) and/or for the rear wheels (4c, 4d) of the vehicle, not supplied when the vehicle is in the standby state,
- at least one onboard computer (1),
- at least one user control module (2, 3) which, when it is activated by the user, delivers to the onboard computer (1) a supply control signal (Sc1, Sc2) to control a supply of the front wheel and/or rear wheel braking modules and, to the front wheel braking modules (4a, 4b) and/or rear wheel braking modules (4c, 4d), braking control signals (S2a, S2b; S3a, S3b) to activate the front and/or rear wheel braking modules when the braking modules are supplied, and
- means for disconnecting the supply of the front and/or rear wheel braking modules when the vehicle has a zero speed and the front and/or rear wheels of the vehicle are immobilized under the action of the braking modules.

2. Device according to Claim 1, wherein the user control module (2, 3) comprises at least one sensor capable of detecting a pressure of the user on a contact element.

3. Device according to Claim 2, wherein a contact element consists of the brake pedal of the vehicle or a contact situated on the vehicle dashboard.

4. Device according to Claim 3, **characterized in that** the contact situated on the vehicle dashboard is a button or a paddle.

5. Device according to any one of the preceding claims in the case where it comprises front wheel braking modules and rear wheel braking modules, **characterized in that** the braking control signal (S2a, S3a) delivered to the left front wheel braking module is also delivered to the left rear wheel braking module, and the braking control signal (S2a, S3a) delivered to the right front wheel braking module is also delivered to the right rear wheel braking module.

6. Device according to any one of Claims 1 to 4, in the case where it comprises front wheel braking modules and rear wheel braking modules, **characterized in that** it comprises a first user control module (2) and a second user control module (3), the braking control signal (S2b) delivered by the first user control module (2) to the left front wheel braking module (4b) is also delivered to the right rear wheel braking module (4c), the braking control signal (S2a) delivered by the first user control module (2) to the right front wheel braking module (4a) is also delivered to the left rear wheel braking module (4d), the braking control signal (S3b) delivered by the second user control module (3) to the left front wheel braking module (4b) is also delivered to the right rear wheel braking module (4c) and the braking control signal (S3a) delivered by the second user control module (3) to the right front wheel braking module (4a) is also delivered to the left rear wheel braking module (4d).

7. Device according to any one of Claims 1 to 4, in the case where it comprises front wheel braking modules and rear wheel braking modules, **characterized in that** it comprises a first user control module (2) and a second user control module (3), the braking control signal (S2b) delivered by the first user control module (2) to the left front wheel braking module (4b) is also delivered to the left rear wheel braking module (4d), the braking control signal (S2a) delivered by the first user control module (2) to the right front wheel braking module (4a) is also delivered to the right rear wheel braking module (4c), the braking control signal (S3b) delivered by the second user control module (3) to the left front wheel braking module (4b) is also delivered to the left rear wheel braking module (4d) and the braking control signal (S3a) delivered by the second user control module (3) to the right front wheel braking module (4a) is also delivered to the right rear wheel braking module (4c).

8. Device according to any one of the preceding claims, **characterized in that** it also comprises means for detecting a degraded operating mode of the braking means of the vehicle in the start state or in the start & stop mode and means capable of making it possible to brake the vehicle in the start state or in the start & stop mode with the aid of the user control module (2, 3) when a degraded operating mode is detected.

9. Device according to Claim 8, **characterized in that** it comprises a communication network for allowing the braking modules to communicate with one another in order to confirm that a vehicle braking request with the aid of the user control module (2, 3) is required and, if the braking request is confirmed, means for maintaining the stability of the vehicle when the braking of the vehicle is applied.

## Patentansprüche

1. Elektrische Bremsvorrichtung für Fahrzeug, wobei die Vorrichtung enthält:
- Bremsmodule für die Vorderräder (4a, 4b) und/oder die Hinterräder (4c, 4d) des Fahrzeugs, die nicht versorgt werden, wenn das Fahrzeug im Ruhezustand ist,
- wenigstens einen Bordcomputer (1),
- wenigstens ein Anwendersteuermodul (2, 3), das dann, wenn es vom Anwender betätigt wird, an den Bordcomputer (1) ein Versorgungssteuersignal (Sc1, Sc2) liefert, um eine Versorgung der Bremsmodule für die Vorderräder und/oder die Hinterräder zu befehlen, und an die Bremsmodule für die Vorderräder (4a, 4b) und/oder die Hinterräder (4c, 4d) Bremssteuersignale (S2a, S2b; S3a, S3b) liefert, um die Bremsmodule für die Vorderräder und/oder die Hinterräder zu aktivieren, wenn die Bremsmodule versorgt werden, und
- Mittel, um die Versorgung der Bremsmodule für die Vorderräder und/oder die Hinterräder zu unterbrechen, sobald unter der Wirkung der Bremsmodule das Fahrzeug eine Geschwindigkeit null hat und die Vorderräder und/oder die Hinterräder des Fahrzeugs sich nicht bewegen.

2. Vorrichtung nach Anspruch 1, wobei das Anwender-Steuermodul (2, 3) wenigstens einen Sensor umfasst, der einen Druck des Anwenders auf ein Kontaktelement erfassen kann.

3. Vorrichtung nach Anspruch 2, wobei ein Kontaktelement durch ein Bremspedal des Fahrzeugs oder durch einen Kontakt, der sich auf der Armaturentafel des Fahrzeugs befindet, gebildet ist.

4. Vorrichtung nach Anspruch 3, **dadurch gekennzeichnet, dass** der Kontakt, der sich auf der Armaturentafel des Fahrzeugs befindet, ein Knopf oder ein Schieber ist.

5. Vorrichtung nach einem der vorhergehenden Ansprüche in dem Fall, in dem sie Bremsmodule für die Vorderräder und Bremsmodule für die Hinterräder enthält, **dadurch gekennzeichnet, dass** das Bremssteuersignal (S2a, S3a), das an das Bremsmodul für das linke Vorderrad geliefert wird, auch an das Bremsmodul für das linke Hinterrad geliefert wird und das Bremssteuersignal (S2a, S3a), das an das Bremsmodul für das rechte Vorderrad geliefert wird, auch an das Bremsmodul für das rechte Hinterrad geliefert wird.

6. Vorrichtung nach einem der Ansprüche 1 bis 4 in dem Fall, in dem sie Bremsmodule für die Vorderräder und Bremsmodule für die Hinterräder enthält, **dadurch gekennzeichnet, dass** sie ein erstes Anwender-Steuermodul (2) und ein zweites Anwender-Steuermodul (3) enthält, wobei das Bremssteuersignal (S2b), das von dem ersten Anwender-Steuermodul (2) an das Bremsmodul für das linke Vorderrad (4b) geliefert wird, auch an das Bremsmodul für das rechte Hinterrad (4c) geliefert wird, das Bremssteuersignal (S2a), das durch das erste Anwender-Steuermodul (2) an das Bremsmodul für das rechte Vorderrad (4a) geliefert wird, auch an das Bremsmodul für das linke Hinterrad (4d) geliefert wird, das Bremssteuersignal (S3b), das durch das zweite Anwender-Steuermodul (3) an das Bremsmodul für das linke Vorderrad (4b) geliefert wird, auch an das Bremsmodul für das rechte Hinterrad (4c) geliefert wird und das Bremssteuersignal (S3a), das durch das zweite Anwender-Steuermodul (3) an das Bremsmodul für das rechte Vorderrad (4a) geliefert wird, auch an das Bremsmodul für das linke Hinterrad (4d) geliefert wird.

7. Vorrichtung nach einem der Ansprüche 1 bis 4 in dem Fall, in dem sie Bremsmodule für die Vorderräder und Bremsmodule für die Hinterräder enthält, **dadurch gekennzeichnet, dass** sie ein erstes Anwender-Steuermodul (2) und ein zweites Anwender-Steuermodul (3) enthält, wobei das Bremssteuersignal (S2b), das durch das erste Anwender-Steuermodul (2) an das Bremsmodul für das linke Vorderrad (4b) geliefert wird, auch an das Bremsmodul für das linke Hinterrad (4d) geliefert wird, das Bremssteuersignal (S2a), das durch das erste Anwender-Steuermodul (2) an das Bremsmodul für das rechte Vorderrad (4a) geliefert wird, auch an das Bremsmodul für das rechte Hinterrad (4c) geliefert wird, das Bremssteuersignal (S3b), das durch das zweite Anwender-Steuermodul (3) an das Bremsmodul für das linke Vorderrad (4b) geliefert wird, auch an das Bremsmodul für das linke Hinterrad (4d) geliefert wird und das Bremssteuersignal (S3a), das durch das zweite Anwender-Steuermodul (3) an das Bremsmodul für das rechte Vorderrad (4a) geliefert wird, auch an das Bremsmodul für das rechte Hinterrad (4c) geliefert wird.

8. Vorrichtung nach einem der vorhergehenden Ansprüche, **dadurch gekennzeichnet, dass** sie außerdem Mittel, um eine verschlechterte Funktionsweise der Bremsmittel des Fahrzeugs im Fahrzustand oder im Stillstand zu erfassen, und Mittel, die ermöglichen, das Fahrzeug im Fahrzustand oder im Stillstand mit Hilfe des Anwender-Steuermoduls (2, 3) zu bremsen, wenn eine verschlechterte Funktionsweise erfasst wird, enthält.

9. Vorrichtung nach Anspruch 8, **dadurch gekennzeichnet, dass** sie ein Kommunikationsnetz enthält, um den Bremsmodulen zu ermöglichen, untereinander zu kommunizieren, um zu bestätigen, dass eine Bremsanforderung des Fahrzeugs mit Hilfe des Anwender-Steuermoduls (2, 3) gefordert wird, und Mittel enthält, um dann, wenn die Bremsanforderung bestätigt wird, die Fahrzeugstabilität aufrechtzuerhalten, wenn die Bremsung des Fahrzeugs erfolgt.
